Europäisches Patentamt

European Patent Office

Office européen des brevets

(11) Publication number: **0 267 760 B1**

(12) **EUROPEAN PATENT SPECIFICATION**

(45) Date of publication of the patent specification:
31.10.90

(21) Application number: **87309868.5**

(22) Date of filing: **06.11.87**

(51) Int. Cl.⁵: **F16B 39/24, F04B 39/12**

(54) **Vessel with sealed aperture.**

(30) Priority: **11.11.86 JP 171911/86**

(43) Date of publication of application:
**18.05.88 Bulletin 88/20**

(45) Publication of the grant of the patent:
**31.10.90 Bulletin 90/44**

(84) Designated Contracting States:
**DE FR GB IT SE**

(56) References cited:
**EP-A- 0 058 211**
**FR-A- 2 509 811**
**US-A- 4 418 918**

(73) Proprietor: **SANDEN CORPORATION, 20 Kotobuki-cho, Isesaki-shi Gunma, 372(JP)**

(72) Inventor: **Shimizu, Shigemi, 425 Higashiarai, Sakai-machi Sawa-gun 370-01(JP)**
Inventor: **Ochiai, Yoshihiro, 141-4, Kita-machi, Isesaki-shi Gunma 372(JP)**

(74) Representative: **Jackson, Peter Arthur et al, Gill Jennings & Every 53-64 Chancery Lane, GB-London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to a vessel having a bolt used to seal an aperture in a housing, such as the compressor housing of a compressor.

A closed vessel which has functional parts therein, such as a compressor housing, is required to have high sealing performance. However, a conventional compressor housing has some apertures containing, for example, a refrigerant valve passing along the axis of a bolt or a blind plug. Therefore, there is the possibility of leakage of fluid and oil from the compressor housing through the apertures even though the apertures are closed by the valves or plugs.

For this reason, sealing mechanisms for securely sealing the apertures are well known in the art. For example, washers made of a relatively soft metal such as aluminium alloy or copper and bolts made of relatively hard metal such as iron may be used. In this sealing mechanism, when the bolts are screwed into or unfastened from the outer surface of the compressor housing, the washers are rotated together with the head portions of the bolts, and both the surfaces of the washers and the openings of the apertures rub each other. Therefore, those surfaces become rough, and there is the possibility of a reduction of sealing performance between those surfaces.

For instance, if the opening of the aperture of a compressor housing made of aluminium alloy and the surface of a washer made of copper are rubbed against one another by the rotation of a bolt, then, because the copper is softer than the aluminium alloy, the aluminium alloy is first detached from the opening of the aperture by the washer. The aluminium alloy which is detached from the opening becomes attached to the surface of the washer and scrapes more aluminium alloy from the opening of the aperture. Thus, the sealing performance of the compressor housing is decreased, and refrigerant fluid or oil leaks out. As a result, there is the possibility of the compressor breaking down. Furthermore, it is also difficult to replace an old bolt with a new one because of the above problem, and maintenance becomes difficult.

It is a primary object of this invention to provide an improved sealing mechanism for sealing an aperture formed in a housing of a vessel.

According to the present invention, a vessel comprises a housing having an aperture with a seating portion formed around one end and against which a washer, made of a metal softer than that of the housing, is sealed by a flange portion of a bolt having a screw-threaded shank extending into the aperture, characterised by rotation preventing means formed on the surface of the seating portion for deforming and engaging the washer to prevent the washer from rotating with the bolt.

The invention will now be described by way of example with reference to the accompanying drawings, in which:

Fig. 1 is a cross-sectional view of a vessel in accordance with the invention;

Fig. 2 is an exploded perspective view of the vessel of Fig. 1; and,

Fig. 3 is an exploded perspective view of a further embodiment of a vessel in accordance with the invention.

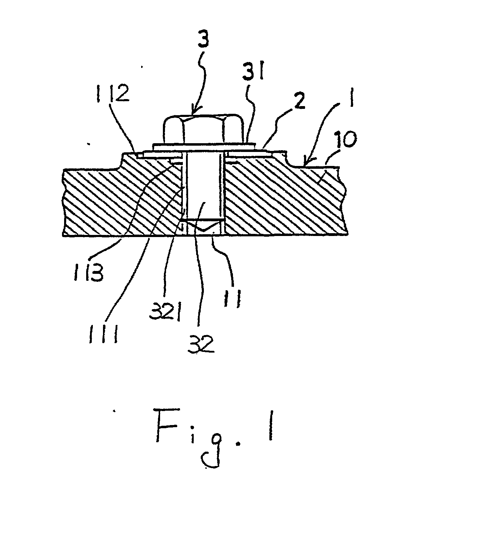

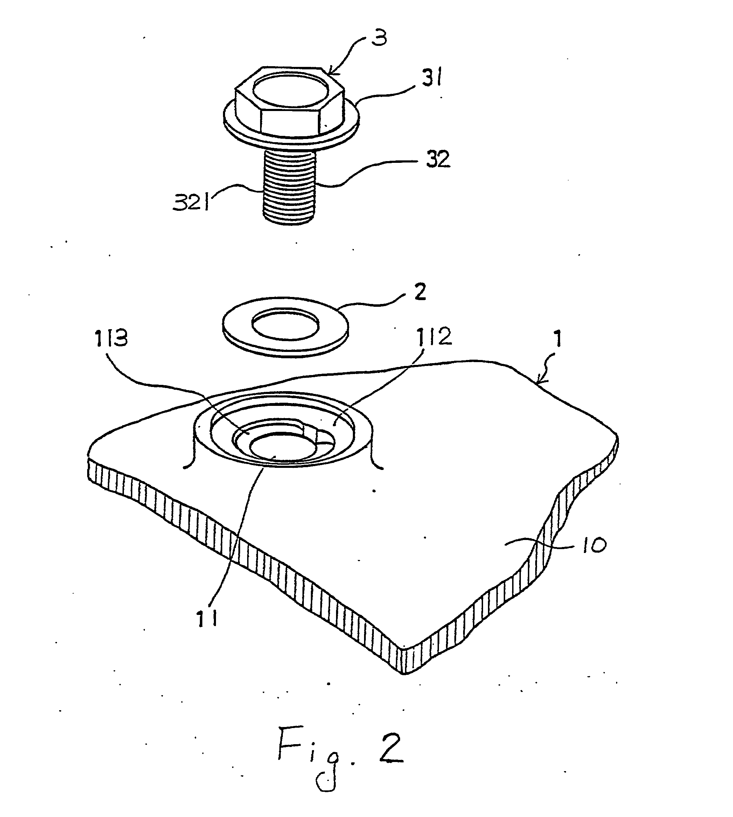

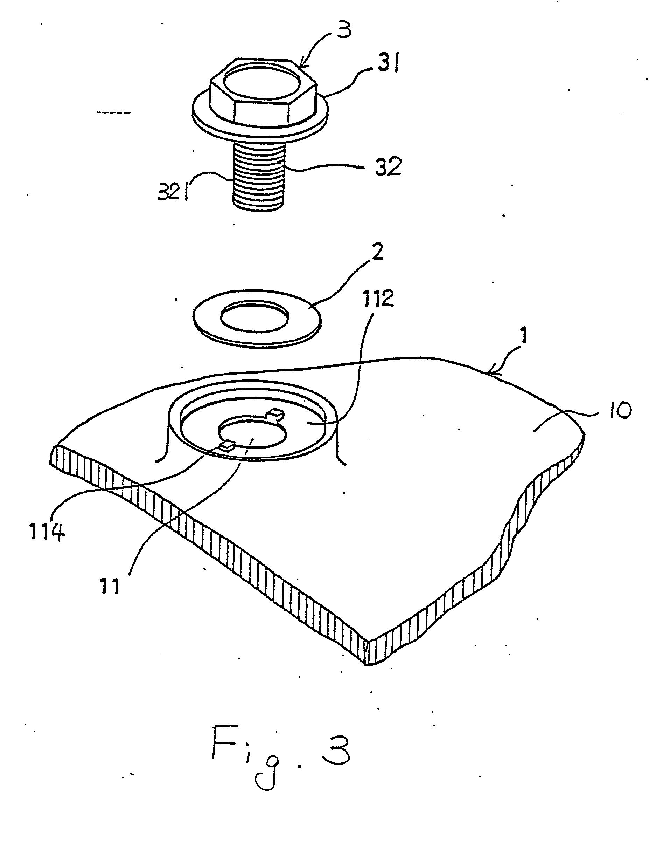

Referring to Figs 1 and 2, a closed vessel 1 includes a housing 10 having an aperture 11 formed therethrough. The housing 10 is formed of a soft material, for example, an aluminium alloy. A threaded portion 111 is formed on the inner surface of the aperture 11. A seating portion 112 is formed at one end of the aperture 11 to seat a washer 2. A concave portion 113 extends partly around the inner edge portion of the seating portion 112 and along the aperture 11. This concave portion 113 may be replaced with convex portions 114, as shown in Figure 3. The washer 2 is made of a soft metallic material, for example copper, and has an inner diameter substantially equal to the outer diameter of the aperture 11. A bolt 3 has a head portion with a flange portion 31 and a screw-threaded shank 32 extending from the head portion.

When the bolt 3 is being screwed into the aperture 11 of the housing 10, the flange portion 31 abuts against a side surface of the washer 2 and the washer 2 rotates together with the flange portion 31 of the bolt 3. The inner edge of the washer 2 is gradually deformed and conformed to fit the concave portion 113 by the axial force of the bolt 3. This occurs because the washer 2 is made of copper, which is softer than the housing 10 made of aluminium alloy. Therefore, the washer 2 is prevented from rotating. As a result, the bottom surface of the washer 2 is not rubbed on the surface of the housing 10, thereby avoiding damaging the housing 10. The deformation of the washer 2 occurs only around the inner edge thereof, and therefore the sealing between the washer 2 and the housing 10 is maintained. When the bolt 3 is unfastened, the washer 2 is again prevented from rotating, thereby offering the same benefits as when the bolt 3 was screwed into the housing 10.

## Claims

1. A vessel comprising a housing (10) having an aperture (11) with a seating portion (112) formed around one end and against which a washer (2), made of a metal softer than that of the housing (10), is sealed by a flange portion (31) of a bolt (3) having a screw-threaded shank (32) extending into the aperture (11), characterised by rotation preventing means (113,114) formed on the surface of the seating portion (112) for deforming and engaging the washer (2) to prevent the washer (2) from rotating with the bolt (3).

2. A vessel according to claim 1, wherein the rotation preventing means (113,114) comprises at least one concave portion (113).

3. A vessel according to claim 2, wherein the concave portion (113) is formed on the radially inner or outer edge of the seating portion (112).

4. A vessel according to claim 1, wherein the rotation preventing means (113,114) comprises at least one convex portion (114).

5. A vessel according to claim 4, wherein the convex portion (114) is formed on the radially inner or outer edge of the seating portion (112).

**Patentansprüche**

1. Behälter mit einem eine Öffnung (11) aufweisenden Gehäuse (10), um das ein Sitzflächenabschnitt (112) gebildet ist, gegen den eine Unterlegscheibe (2), die aus einem Material weicher als das des Gehäuses (10) hergestellt ist, durch einen Flanschabschnitt (31) eines Bolzens (3) abgedichtet ist, der einen sich in die Öffnung (11) erstreckenden Schaft (32) mit Schraubengewinde aufweist, gekennzeichnet durch eine Rotationsverhinderungseinrichtung (113, 114), die auf der Oberfläche des Sitzflächenabschnittes (112) zum Deformieren und Erfassen der Unterlegscheibe (2) zum Verhindern, daß die Unterlegscheibe (2) mit dem Bolzen (3) rotiert, gebildet ist.

2. Behälter nach Anspruch 1, bei dem die Rotationsverhinderungseinrichtung (113, 114) mindestens einen konkaven Abschnitt (113) aufweist.

3. Behälter nach Anspruch 2, bei dem der konkave Abschnitt (113) auf dem radial inneren und äußeren Rand des Sitzflächenabschnittes (112) gebildet ist.

4. Behälter nach Anspruch 1, bei dem die Rotationsverhinderungseinrichtung (113, 114) mindestens einen konvexen Abschnitt (114) aufweist.

5. Behälter nach Anspruch 4, bei dem der konvexe Abschnitt (114) auf dem radial inneren und äußeren Rand des Sitzflächenabschnittes (112) gebildet ist.

**Revendications**

1. Récipient comprenant un carter (10) percé d'une ouverture (11) munie d'une partie de siège (112) formée autour d'une extrémité et contre laquelle une rondelle (2), réalisée dans un métal plus mou que celui du carter (10), vient s'appuyer de manière étanche par une partie de collerette (31) d'un boulon (3) comportant une tige filetée (32) qui pénètre dans l'ouverture (11), récipient caractérisé en ce qu'il comprend des moyens anti-rotation (113, 114) formés sur la surface de la partie de siège (112) pour se déformer et s'engager contre la rondelle (2) de manière à empêcher cette rondelle (2) de tourner avec le boulon (3).

2. Récipient selon la revendication 1, caractérisé en ce que les moyens anti-rotation (113, 114) comprennent au moins une partie concave (113).

3. Récipient selon la revendication 2, caractérisé en ce que la partie concave (113) est formée sur le bord radialement intérieur ou extérieur de la partie de siège (112).

4. Récipient selon la revendication 1, caractérisé en ce que les moyens anti-rotation (113, 114) comprennent au moins une partie convexe (114).

5. Récipient selon la revendication 4, caractérisé en ce que la partie convexe (114) est formée sur le bord radialement intérieur ou extérieur de la partie de siège (112).

Fig. 1

Fig. 2

Fig. 3